Europäisches Patentamt

European Patent Office

Office européen des brevets

(11) Veröffentlichungsnummer: **0 124 681**
**B1**

(12) **EUROPÄISCHE PATENTSCHRIFT**

(45) Veröffentlichungstag der Patentschrift:
**27.08.86**

(51) Int. Cl.⁴: **H 01 H 31/00**

(21) Anmeldenummer: **84100256.1**

(22) Anmeldetag: **12.01.84**

(54) Erdungseinrichtung.

(30) Priorität: **07.04.83 DE 3312477**

(43) Veröffentlichungstag der Anmeldung:
**14.11.84 Patentblatt 84/46**

(45) Bekanntmachung des Hinweises auf die Patenterteilung:
**27.08.86 Patentblatt 86/35**

(84) Benannte Vertragsstaaten:
**AT BE CH FR IT LI NL SE**

(56) Entgegenhaltungen:
**DE - A - 2 427 347**
**DE - B - 2 907 559**
**DE - C - 681 945**
**FR - A - 624 521**
**GB - A - 947 102**
**US - A - 4 002 869**

(73) Patentinhaber: **Schaltbau Gesellschaft mbH,**
**Klausenburger Strasse 6, D-8000 München 80 (DE)**

(72) Erfinder: **John, Manfred, Dipl.-Ing.,**
**Konrad-Celtis-Strasse 15, D-8000 München 70 (DE)**
Erfinder: **Zinke, Gerhard, Dipl.-Ing., Konradstrasse 5,**
**D-4950 Minden (DE)**

(74) Vertreter: **Schneider, Wilhelm, c/o kabelmetal electro**
**GmbH Kabelkamp 20 Postfach 260,**
**D-3000 Hannover 1 (DE)**

## Beschreibung

Die Erfindung hat eine in einem Gehäuse mit abklappbarem Deckel untergebrachte Erdungseinrichtung für von der Zugsammelschiene in Schienenfahrzeugen zu speisenden elektrischen Vorrichtungen im Schienenfahrzeug zum Gegenstand.

Bei aus der Zugsammelschiene gespeisten, in Schienenfahrzeugen vorhandenen elektrischen Vorrichtungen ist es bisweilen erforderlich, Reparaturen, Ergänzunen oder Umbauten vorzunehmen, während die Zugsammelschiene des Schienenfahrzeugs unter Spannung steht. Dies erforderte bisher, dass das Abschalten der Vorrichtung von der Zugsammelschiene und die Erdung der Vorrichtung mit dem Triebfahrzeugführer oder der Leitstelle der stationären Energieversorgungsstation abgesprochen wurde, was zu Missverständnissen Anlass geben konnte. Während des Zugbetriebes waren solche Arbeiten, auch wenn sie schnell durchgeführt werden konnten, nicht möglich, weil das aus Sicherheitsgründen dazu erforderliche Abkuppeln des Schienenfahrzeugs zeitlich zu aufwendig war. Damit wäre auch der im schnellen Austausch schadhafter Bauteile liegende Nutzen von mikroprozessorgesteuerten Diagnoseeinrichtungen in Frage gestellt.

Der Erfindung liegt die Aufgabe zugrunde, eine Erdungsvorrichtung anzugeben, die ein sicheres und schnelles Trennen von der Zugsammelschiene und Erden der in Frage stehenden Vorrichtungen erlauben, ohne das Schienenfahrzeug elektrisch von der Zugsammelschiene abkuppeln zu müssen.

Gemäss der Erfindung wird diese Aufgabe dadurch gelöst, dass in dem Gehäuse Kontakte für den Anschluss an die Zugsammelschiene und an die zu speisende Vorrichtung vorhanden sind, in die bei geschlossenem Deckel ein an der Innenseite des Deckels befestigtes Trennmesser eingreift, und dass in dem Gehäuse ein schwenkbares, fest an Erde angeschlossenes Erdungsmesser vorhanden ist, das bei geöffnetem Deckel in den zur Vorrichtung führenden Kontakt einlegbar ist.

Beim Abklappen des Deckels wird das Trennmesser durch die Klappbewegung aus den beiden Kontakten gezogen. Der Kontakt für den Anschluss an die Vorrichtung wird dabei frei für das Einlegen des Erdungsmessers.

Die Vorteile der erfindungsgemässen Erdungseinrichtung sind insbesondere in folgenden Tatsachen zu sehen:

Bei durchgehend gekuppelter, unter Spannung stehender Zugsammelschiene können an den elektrischen Einrichtungen eines oder mehrerer Schienenfahrzeuge eines Zuges Arbeiten ausgeführt werden, ohne die Energieversorgung der anderen Schienenfahrzeuge des Zuges aus der Zugsammelschiene zu unterbrechen.

Eine vorschriftsmässige, zeitsparende Erdung ist ohne umständliche und zeitraubende Verständigung mit dem Triebfahrzeugführer oder der Leitstelle der stationären Energieversorgungsstation möglich. Dies führt zu erhöhter Sicherheit von beteiligten Personen.

Schadhafte elekrische Bauteile können auch während des Zugbetriebs bei kurzen Betriebspausen und Aufenthalten ausgetauscht werden.

Die Verwendung mikroprozessorgesteuerter Diagnoseeinrichtungen mit Auswertung wird begünstigt.

Der Erfindungsgegenstand ist auch bei Wartungs- und Instandsetzungsarbeiten in Werkstätten verwendbar.

Der nachträgliche Einbau des Erfindungsgegenstandes in bereits vorhandene Fahrzeuge ist problemlos.

In Weiterbildung der Erfindung ist an der Innenseite des Deckels eine aus Isolierstoff bestehende Rippe vorhanden, die bei geschlossenem Deckel den die Kontakte und das Trennmesser enthaltenden Raum möglichst vollständig von dem das in Ruhestellung befindliche Erdungsmesser enthaltenden Raum trennt. Dies hat den Vorteil, dass bei noch mit der Vorrichtung verbundenem Erdungsmesser der Deckel nicht geschlossen werden kann, weil die Rippe an das Erdungsmesser anstösst und dass bei geschlossenem Deckel eine zusätzliche Isolierung des Erdungsmessers von den im Gehäuse unter Spannung stehenden Bauteilen erfolgt.

Mit besonderem Vorteil wird der Kontakt für den Anschluss an die Zugsammelschiene an der dem Deckelscharnier gegenüberliegenden Seite des Gehäuseinneren angebracht. Dies bewirkt, dass das Trennmesser bereits am Anfang der Klappbewegung des Deckels aus dem Kontakt für den Anschluss an die Zugsammelschiene herausgezogen wird.

Um bei geöffnetem Deckel ein unbeabsichtigtes Berühren des unter Spannung stehenden Kontaktes für den Anschluss an die Zugsammelschiene zu vermeiden, wird in Weiterbildung der Erfindung dieser Kontakt in einem durch Isolierstoff abgegrenzten, zum Deckel hin offenen Teilraum des Gehäuseinneren angebracht, der bei geöffnetem Deckel abgedeckt werden kann. Um auch beim Bedienungsfehler weitgehend zu vermeiden ist, kann weiter vorgesehen sein, dass die Abdeckung des Teilraumes selbsttätig durch einen am Erdungsmesser angebrachten Isolierkörper beim Anlegen des Erdungsmessers an den Kontakt für den Anschluss an die Vorrichtung erfolgt.

Aus dem gleichen Grunde kann noch in Weiterbildung der Erfindung vorgesehen werden, dass auch die Bewegung des Erdungsmessers mit der Klappbewegung des Deckels gekoppelt wird.

Die Figuren zeigen in zum Teil schematischer Darstellung Ausführungsbeispiele von Erdungseinrichtungen gemäss der Lehre der Erfindung.

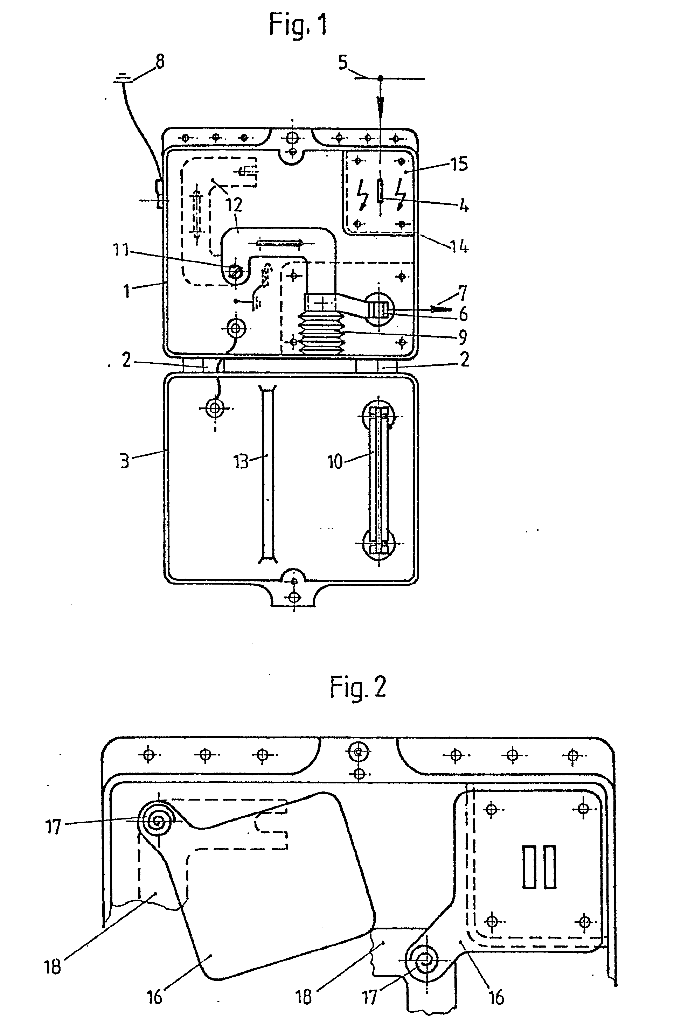

In Fig. 1 bezeichnet 1 ein Gehäuse für die Erdungseinrichtung, an das über die Scharniere 2 ein abklappbarer Deckel 3 angelenkt ist. Der Kontakt 4 dient dem Anschluss an die Zugsammelschiene 5. Der Kontakt 6 ist gegen das bei 8 geerdete Gehäuse 1 bei 9 isoliert und führt mit der Leitung 7 zu der nicht dargestellten elektrischen Vorrichtung. In dem Deckel 3 ist ein Trennmesser 10 vorhanden, das bei geschlossenem Gehäuse die Kontakte 4 und 6 miteinander verbindet und damit die Vorrichtung auf die Zugsammelschiene 5 schaltet. Weiterhin ist in dem Gehäuse 1 ein um die Welle 11 schwenkbares und fest an Erde liegendes Erdungsmesser 12 vorhanden, das bei abgeklapptem Deckel 3 an den Kontakt 6 gelegt werden kann und damit die Vorrichtung erdet.

Weiterhin enthält der Deckel eine Rippe 13, die bei geschlossenem Deckel 3 den die Kontakte 4 und 6 und das Trennmesser 10, also die auf dem Potential der Zugsammelschiene 5 liegenden Teile der Einrichtung, von dem in Ruhelage (gestrichelte Darstellung) befindlichen Erdungsmesser 12 trennt. Der Kontakt 4 liegt in einem durch eine isolierende Wandung 15 von dem übrigen Innenraum des Gehäuses 1 abgeteilten Teilraum 14 an der den Deckelscharnieren 2 gegenüberliegenden Seite des Gehäuses 1. Er kann bei abgeklapptem Deckel 3 abgedeckt werden. Dies kann zum Beispiel durch eine in der Figur 2 mit 16 bezeichneten Scheibe aus Isolierstoff geschehen, die unter der Einwirkung einer sie gegen den Uhrzeigersinn drehenden Torsionsfeder 17 an das Erdungsmesser 18 angelenkt ist und beim Anlegen des Erdungsmessers 18 aus der links in der Fig. 2 dargestellten Lage in die rechts dargestellte Lage gelangt.

## Patentansprüche

1. In einem Gehäuse mit abklappbarem Deckel (3) untergebrachte Erdungseinrichtung für von der Zugsammelschiene (5) in Schienenfahrzeugen zu speisenden elektrischen Vorrichtungen im Schienenfahrzeug, dadurch gekennzeichnet, dass in dem Gehäuse (1) Kontakte (4, 6) für den Anschluss an die Zugsammelschiene (5) und an die zu speisende Vorrichtung vorhanden sind, in die bei geschlossenem Deckel (3) ein an der Innenseite des Deckels (3) befestigtes Trennmesser (10) eingreift und dass in dem Gehäuse (1) ein schwenkbares, fest an Erde angeschlossenes Erdungsmesser (12; 18) vorhanden ist, das bei geöffnetem Deckel (3) in den zur Vorrichtung führenden Kontakt (6) einlegbar ist.

2. Erdungseinrichtung nach Anspruch 1, dadurch gekennzeichnet, dass an der Innenseite des Deckels (3) eine aus Isolierstoff bestehende Rippe (13) vorhanden ist, die bei geschlossenem Deckel (3) den die Kontakte (4, 6) und das Trennmesser (10) enthaltenden Raum möglichst vollständig von dem das in Ruhestellung befindliche Erdungsmesser (12) enthaltenden Raum trennt.

3. Erdungseinrichtung nach Anspruch 1 oder 2, dadurch gekennzeichnet, dass der Kontakt (4) für den Anschluss an die Zugsammelschiene (5) an der dem Deckelscharnier (2) gegenüberliegende Seite des Gehäuseinnern angebracht ist.

4. Erdungseinrichtung nach einem der Ansprüche 1 bis 3, dadurch gekennzeichnet, dass der Kontakt (4) für den Anschluss an die Zugsammelschiene (5) in einem durch Iolierstoff (15) abgetrennten, zum Deckel (3) hin offenen Teilraum (14) des Gehäuseinnern angebracht ist, der bei geöffnetem Deckel (3) abgedeckt werden kann.

5. Erdungseinrichtung nach Anspruch 1, dadurch gekennzeichnet, dass die Abdeckung des Teilraumes (14) selbsttätig durch einen am Erdungsmesser (12) angebrachten Isolierkörper (16) beim Anlegen des Erdungsmessers (12) an den Kontakt (6) für den Anschluss an die Vorrichtung erfolgt.

6. Erdungseinrichtung nach einem der Ansprüche 1 bis 5, dadurch gekennzeichnet, dass die Bewegung des Erdungsmessers (12) mit der Klappbewegung des Deckels (3) gekoppelt ist.

## Claims

1. Earthing device, accommodated in a housing having a swing-down cover (3), for electric devices in the rail vehicle, to be supplied by the train bus-bar (5) in rail vehicles, characterised in that, in the housing (1), contacts (4, 6) are available for connection to the train bus-bar (5) and the device to be supplied, which contacts are engaged, when the cover (3) is closed, by an isolating blade (10) mounted on the inside of the cover (3) and that in the housing (1) a swivelling earthing blade (12, 18) is present which is firmly connected to earth and which can be inserted into the contact (6) leading to the device when the cover (3) is opened.

2. Earthing device according to claim 1, characterised in that a rib (13) consisting of insulating material is present on the inside of the cover (3) which rib, when the cover (3) is closed, separates the space containing the contacts (4, 6) and the isolating blade (10) as completely as possible from the space containing the earthing blade (12) located in the rest position.

3. Earthing device according to claim 1 or 2, characterised in that the contact (4) for connection to the train bus-bar (5) is attached to the side of the interior of the housing opposite to the cover hinge (2).

4. Earthing device according to one of claims 1 to 3, characterised in that the contact (4) for connection to the train bus-bar (5) is mounted in a part space (14) of the interior of the housing which is open towards the cover (3), is separated by insulating material (15) and can be covered when the cover (3) is opened.

5. Earthing device according to claim 1, characterised in that the part space (15) is automatically covered by an insulating body (16) attached to the earthing blade (12) when the earthing blade (12) is applied to the contact (6) for connection to the device.

6. Earthing device according to claim 1 or one of the following claims, characterised in that the movement of the earthing blade (12) is coupled to the swinging movement of the cover (3).

## Revendications

1. Installation de mise à la terre montée dans un boîtier à couvercle (3) rabattable pour des dispositifs électriques de véhicules sur rails à alimentation par la barre collectrice de traction (5) dans le véhicule sur rails, caractérisée en ce que, dans le boîtier (1) sont prévus des contacts (4, 6) servant au raccordement à la barre collectrice de traction (5) et au dispositif à alimenter, contacts dans lesquels, lorsque le couvercle (3) est fermé, est engagé un couteau d'interrupteur (10) fixé à la face intérieure du couvercle (3) et en ce que, dans le boîtier (1), est prévu un couteau de prise de terre (12, 18) pivotant, raccordé de façon

0 124 681

fixe à la terre et qui, lorsque le couvercle (3) est ouvert, peut être inséré dans le contact (6) menant au dispositif.

2. Installation de mise à la terre selon la revendication 1, caractérisée en ce que sur la face intérieure du couvercle (3) est prévue une nervure (13), constituée en matière isolante, qui, lorsque le couvercle (3) est fermé, sépare aussi complètement que possible, l'espace contenant les contacts (4, 6) et le couteau d'interrupeteur (10) de l'espace contenant le couteau de prise de terre (12) se trouvant en position de repos.

3. Installation de mise à la terre selon la revendication 1 ou 2, caractérisée en ce que le contact (4) prévu pour le raccordement à la barre collectrice de traction (5) est disposé sur la face de l'intérieur du boîtier située à l'opposé de la charnière (2) du couvercle.

4. Installation de mise à la terre selon l'une des revendications 1 à 3, caractérisée en ce que le contact (4) prévu pour le raccordement à la barre collectrice de traction (5) est disposé dans un espace partiel (14) de l'intérieur du boitier, séparé par de la matière isolante (15), ouvert vers le couvercle (3) et qui peut être recouvert lorsque le couvercle (3) est ouvert.

5. Installation de mise à la terre selon la revendication 1, caractérisée en ce que le recouvrement de l'espace partiel (15) s'effectue automatiquement par un corps isolant (16) posé sur le couteau de prise de terre (12), lorsque ce couteau de prise de terre (12) s'applique sur le contact (6) prévu pour le raccordement au dispositif.

6. Installation de mise à la terre selon la revendication 1 ou l'une des suivantes, caractérisée en ce que le déplacement du couteau de prise de terre (12) est couplé avec le mouvement de rabattement du couvercle (3).

0 124 681

Fig. 1

Fig. 2